# DEMANDE DE BREVET EUROPEEN

(11) **EP 3 995 456 A1**
(43) Date de publication de la demande: **11.05.2022**
(21) Numéro de dépôt: 21205025.6
(22) Date de dépôt: 27.10.2021
(51) Int. Cl.: C02F 1/00, C02F 1/66

(54) **PROCÉDÉ ET INSTALLATION DE CONTRÔLE ET RÉGULATION DE L'INJECTION DE CO2 POUR TRAITER UN EFFLUENT**

(30) Priorité: 04.11.2020 FR 2011316
(71) Demandeur: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: ALBAN, Bruno, 92227 Bagneux (FR); BRAS, Dominique, 92227 BAGNEUX (FR); CAMPO, Philippe, 92227 Bagneux (FR)
(74) Mandataire: Air Liquide

(57) **Abrégé**

Un procédé de traitement d'un effluent, qui comporte l'injection (3), dans l'effluent, de CO₂ ou d'un mélange comportant du CO₂, se caractérisant par la mise en œuvre des mesures suivantes :
a. On procède à une mesure du pH (6) de l'effluent en amont du point d'injection du CO₂ ou du mélange dans le procédé ;
b. On a procédé au préalable à la détermination d'une courbe de dose de CO₂ à injecter en fonction du pH d'un milieu pour un volume déterminé en litre ou en mètre cube, par exemple par calculs ou à partir de tests expérimentaux, et l'on entre cette courbe dans un régulateur ou automate (4) apte à contrôler l'opération du procédé ;
c. On détecte la présence d'un débit d'effluent à traiter, par exemple par la mise en marche d'une pompe (2) ou encore par la détection d'un débit par un débitmètre, et l'on injecte la dose de CO₂ ou de mélange, déterminée par ladite courbe et multipliée par le débit d'effluent à traiter.

## Description

La présente invention concerne le domaine du traitement d'eaux à pH élevé, pH que l'on veut abaisser en injectant du CO₂, qui est considéré comme un di-acide faible.
Pour ce faire, en général, en l'absence de bassin/cuve de contact on injecte le CO₂ avec plus ou moins d'efficacité dans l'eau/l'effluent en ligne dans une canalisation véhiculant l'eau/l'effluent, grâce à un injecteur, par exemple un simple tuyau percé ou encore un injecteur de structure plus élaborée.
On sait en effet que selon l'installation industrielle considérée, on ne dispose pas d'un tel bassin et il n'est pas possible d'en positionner un, essentiellement faute de place.

Il peut alors dans certaines conditions être délicat de garantir la constance du traitement, en faisant une mesure de pH en aval de l'injection : par exemple lors du démarrage, ou encore lors de rejets de courte durée ou encore lors d'une variation brusque du pH de l'effluent entrant.

Actuellement, dans cette industrie, le contrôle du procédé se réalise par une mesure de pH placée en aval de l'injection. La régulation du débit de CO₂ se fait par un automate/contrôleur qui va ajuster le débit de CO₂ en fonction du résultat obtenu, à savoir de la différence entre la mesure de pH obtenus et une consigne ou valeur désirée.
La régulation peut être plus ou moins fine et réactive grâce à un paramétrage classique type PID par exemple.

Ainsi :
- Si le pH est trop haut par rapport à la consigne, on ordonne en général l'ouverture maximale de la vanne de régulation pour avoir le débit maximum de CO₂.
- Si le pH baisse et donc se rapproche de la consigne, on ordonne en général une diminution du débit voire même une fermeture de la vanne de régulation/injection.
- Si le pH passe en dessous de la valeur de consigne, le débit de CO₂ devient nul.

Tout l'art du concepteur sera de trouver le bon mode de régulation et de bien le paramétrer pour maintenir la valeur de pH corrigé au maximum du temps au voisinage de la consigne ou à la consigne.

Malheureusement, cela peut s'avérer délicat. Par exemple, dans le cas où le fonctionnement est fortement séquencé, c'est-à-dire par exemple quand l'effluent à neutraliser est envoyé par une pompe dans la canalisation où a lieu l'injection de CO₂ avec des mises en marche nombreuses de la pompe sur des courtes périodes. Le volume d'effluent contenu entre la pompe et l'emplacement de la sonde permettant le contrôle du pH et la régulation de l'injection ne sera pas traité, cela à chaque démarrage de la pompe. Si la pompe est mise en marche plusieurs fois par heure, comme c'est le cas sur de nombreuse installations, où la pompe est située dans un regard de petit volume et permet le rejet de l'effluent dans un réseau d'assainissement, le volume cumulé sur chaque démarrage ne sera pas traité, ou en tout cas pas correctement.

La présente invention s'attache alors à proposer une solution aux problèmes techniques mentionnés ci-dessus, et donc de proposer un procédé amélioré de traitement d'eaux, mettant en œuvre une injection de CO₂, que ce CO₂ soit sous forme gaz ou liquide.
Et si l'on préfère selon l'invention sans aucun doute un gaz pur, on peut envisager des mélanges de gaz comportant au moins 25% de CO₂.

Comme on le verra plus en détails dans ce qui suit, la présente invention met en œuvre une mesure du pH entrant (i.e. prise bien en amont de l'injection, ce qui laisse du temps pour réagir selon le résultat de la mesure), puis on calcule la dose de CO₂ à appliquer, de façon prédictive.
On doit considérer que l'on effectue la mesure de pH suffisamment en amont de l'injection tout simplement pour que le point de mesure de pH ne soit pas perturbé par l'injection en aval.
En général, un effluent type présente une courbe typique de dose de CO₂ à injecter en fonction du pH de l'effluent pour un volume déterminé en litre ou en mètre cube.
Cette courbe est obtenue soit à partir de calculs basés sur des analyses de composition (des logiciels commerciaux sont disponibles pour cela ou tout simplement par un calcul classique de pH pour déterminer le besoin en CO₂ et donc la courbe de neutralisation), soit à partir de tests menés au laboratoire.
Ces tests consistent dans un titrage volumétrique classique acide-base à la burette ou un calcul de pH suivant les règles de l'art qui permet de déterminer la quantité d'acide à injecter.
Pour le CO₂, en fonction de la solution technique proposée, la quantité réelle injectée correspond au besoin théorique (tel qu'évalué ci-dessus) divisé par le rendement de transfert.
Ainsi, pour une injection en ligne, le rendement est considéré comme étant compris entre 90 et 95%. Donc au dosage titrimétrique précédant, on ajoute typiquement 10%.

La dose ainsi déterminée est multipliée par le débit d'effluent. Ce débit est soit fixe et correspond au débit de la pompe, soit variable, il est alors mesuré par un débitmètre placé juste après la pompe. La courbe ainsi déterminée est fournie à l'intelligence ou l'automate/calculateur qui va alors gérer l'injection.

Et l'on comprend alors sans difficulté l'amélioration que constitue la proposition selon la présente invention, puisque en effet, pour une neutralisation en ligne, en travaillant sur des données disponibles avant l'injection, il est beaucoup plus aisé de garantir le bon dosage de CO₂ dès la mise en route de la pompe de rejet, et ce, quoi qu'il arrive.

Ceci est particulièrement vrai dans le cas d'une vidange rapide et fréquente d'une fosse ou puisard contenant un effluent ou de l'eau alcaline (pH supérieur à 7 par exemple). Le liquide sera immédiatement traité avec le bon débit de CO₂ dès son entrée vers l'injecteur.
La mesure de pH en sortie d'injecteur (en aval de l'injection) devient alors optionnelle, elle n'est alors plus là qu'à titre informatif, de façon à vérifier le bon contrôle et régulation de l'injection du CO₂.
On a alors grâce à l'invention une anticipation « intrinsèque » au système tel que proposé, sans artefact comme dans le mode opératoire classique (basé sur la mesure de pH en aval qui nécessite une anticipation).

On peut donc dire en résumé s'agissant de la présente invention que :
- on réalise une neutralisation avec du CO₂ en prenant en compte le pH de l'effluent/eau avant traitement/neutralisation et uniquement lui.
- ainsi :
   - Seul le pH de l'eau/effluent à traiter est considéré, pas sa composition.
   - La neutralisation vise à ne réaliser que des réactions mettant en jeu un acide et des bases/composés alcalins. Pour ce faire, on utilise une courbe préétablie de neutralisation qui contient la dose de CO₂ à utiliser en fonction du pH initial de l'eau/effluent à traiter.
   - On procède alors à un calcul du débit de CO₂ à injecter en fonction du débit d'eau/effluent entrant (le ratio de débits correspond à la dose).
   - On ne contrôle pas le procédé de traitement en fonction d'un pH mais uniquement sur un débit de CO₂ : écart entre un débit de CO₂ calculé (donc une consigne = dose x débit mesuré d'eau) et un débit de CO₂ mesuré qui permet de piloter une vanne de régulation du débit de CO₂ gazeux injecté. Le débit d'eau est donc la variable perturbatrice de la boucle de contrôle & régulation de l'invention.
   - Le principal avantage de tout ceci est de pouvoir neutraliser immédiatement, au démarrage à temps 0, le débit d'effluent/eau dès qu'il arrive, ce que ne permettent pas les procédés de l'art antérieur.

On démarre donc ici directement avec un débit de CO₂ nécessaire, calculé, « en aveugle » en quelque sorte.

Et l'on peut se reporter aux documents de l'art antérieur suivants pour mieux comprendre cette différence d'approche :
- document FR-2 767 522A1 : ce document décrit un procédé de traitement d'eau mettant en œuvre un contrôle des quantités de CO₂ et d'ozone injectées dans l'eau à traiter, en fonction des données suivantes : le débit, la température, le pH de l'eau à traiter (entrant), et le pH(sortie) de l'eau traitée. Le procédé décrit dans ce document détermine un pH de consigne, à partir d'au moins un des paramètres mesurés précédemment, et ajuste alors en fonction de l'écart entre le pH de sortie et la consigne, la proportion de CO₂ à injecter dans l'eau à traiter, et il procède selon la même démarche pour l'ajustement de l'injection d'ozone.
C'est donc_l'écart entre le pH de consigne et le pH mesuré en sortie qui va piloter une vanne de régulation de l'injection de CO₂. Le débit de CO₂ est donc variable, et on vise à réguler le pH. Le traitement des premiers millilitres d'eau entrants est donc tout à fait impossible (nécessité d'un temps de latence).
- document US2010/230331 : ce document concerne au principal un procédé de séparation des phases solides contenues dans un effluent, comportant une étape d'injection d'un agent agrégant, et le document décrit en effet différentes approches de régulation en fonction de différents positionnements d'une mesure de pH dans l'installation.
On pourra se reporter aux figures 6 et 7 du document, où les auteurs proposent de mesurer le pH de l'eau à traiter, d'utiliser une courbe de dose (g/l par exemple de CO₂) en fonction du pH en abscisse, puis d'injecter la dose adéquate. Il n'est jamais fait mention du débit d'eau/effluent qui entre dans leur procédé. Or, ce paramètre est crucial selon la présente invention puisque c'est la variable qui influence (perturbe) notre boucle de contrôle du procédé comme on l'a vu ci-dessus.
Et l'on ne sait pas dès lors si ce document met en œuvre un débit d'eau fixe.
- les procédés de reminéralisation d'eau potable : sur la base d'une qualité d'eau à reminéraliser (composition, minéraux présents, coefficient TAC...), on calcule un besoin en CO₂ qui deviendra la consigne de débit de CO₂ consigne sur laquelle on va baser une régulation du procédé.
On ajoute ensuite de la chaux ce qui conduit cette eau à se "recharger" en minéraux/TAC. C'est donc bien une reminéralisation (l'eau de départ est pauvre en minéraux puisqu' adoucie). En conséquence ici aussi, on s'éloigne de la présente invention qui est une neutralisation et non pas une minéralisation puisque dans ces procédés de reminéralisation le pH n'a pas d'importance, c'est bien la composition de l'eau à reminéraliser qui importe et qui conditionne la courbe de besoin... qui sera donc bien différente de celle utilisée selon la présente invention de neutralisation.

Les figures et l'exemple présentés ci-dessous permettent de bien comprendre l'intérêt de l'invention.

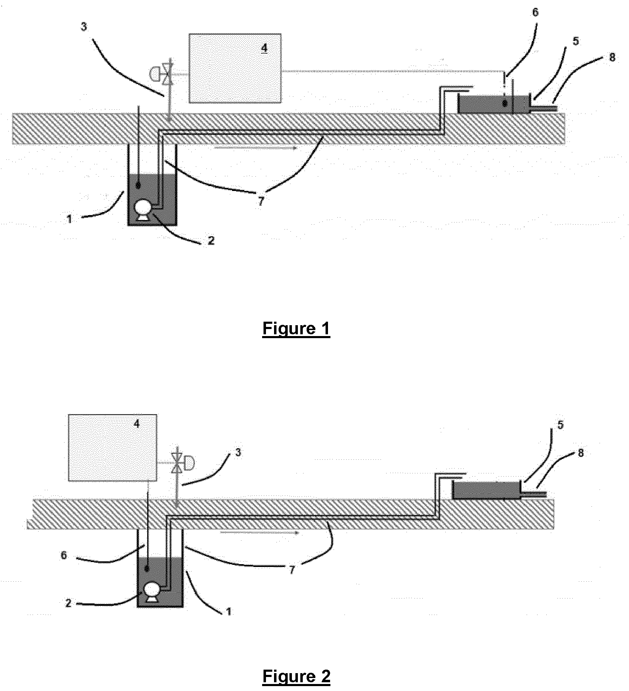

La Figure 1 annexée illustre une installation mettant en œuvre une solution standard selon l'art antérieur.

On reconnait sur cette figure 1 les éléments suivants :
- 1 : fosse d'entrée
- 2 : pompe
- 3 : injection de CO₂ (dans la canalisation 7)
- 4: automate
- 5 : bassin de sortie
- 6 : une mesure de pH pratiquée dans le bassin de sortie
- 7 : canalisation de sortie de pompe
- 8 : sortie effluent neutralisé

Considérons l'exemple de mise en œuvre suivant : il s'agit de neutraliser un effluent qui arrive dans la fosse d'entrée 1, d'un volume utile de 2 m³.
Le débit d'effluent entrant est voisin de 30 m³/h et le débit de la pompe 2, qui permet de vider la fosse d'entrée, est voisin de 80 m³/h.
En résumé, quand la fosse contient 2 m³ d'effluent, la pompe se met en marche et vidange la fosse. Au débit de la pompe, la vidange se fait en un peu plus de 2,5 minutes.
En raison du débit d'effluent qui arrive sur la fosse, cette séquence de vidange se fait environ 15 fois par heure.
La canalisation 7 en sortie de pompe permet de refouler l'effluent à environ 150 m de la fosse d'entrée dans un regard à ciel ouvert d'environ 1 m³.
La canalisation est enterrée sur pratiquement l'ensemble de son parcours. Elle est de diamètre 120 mm pour respecter les conditions hydrauliques optimales de mélange en vue de neutraliser l'effluent. En raison de son diamètre et sa longueur, le volume d'effluent contenu dans cette canalisation entre la sortie de la pompe et le bassin de sortie est de l'ordre de 1,7 m³.

Sur une neutralisation « standard » la régulation de l'acide injecté, ici du CO₂, est réalisée à partir de la mesure de pH située en fin de canalisation (6) ici dans le bassin de sortie. Par définition, ce bassin est à un pH proche de la neutralité puisqu'il correspond au rejet final. Lors du démarrage de la pompe de vidange, il faut qu'une partie plus ou moins importante arrive dans ce bassin pour que le pH augmente et que l'ordre d'injection soit donné au régulateur 4. En conséquence, avant que le CO₂ soit injecté et mélangé dans l'effluent, une partie importante du volume d'effluent de la canalisation sera déversé dans le bassin de sortie sans être traité et donc au milieu naturel ou dans le réseau d'assainissement, en raison de la petite taille du bassin de sortie.
Dans cet exemple, le volume contenu dans la canalisation étant proche de 1,7 m³, et la fréquence horaire de démarrage de la pompe proche de 15 fois par heure, entre les 2/3 et les 3/4 de l'effluent ne seront pas traités correctement avec une neutralisation régulée de façon standard en ligne.

Pour pallier ce problème, l'injection de CO₂ pourrait être anticipée mais alors l'injection n'étant plus directement proportionnelle au besoin, on a un risque de sur-acidification ou de surconsommation.
Bien entendu Il est aussi possible, pour résoudre le problème, de réaliser un bassin de sortie de grande taille, ceci pour « amortir » les démarrages fréquents de la pompe, mais cela n'est pas toujours réalisable pour des problèmes d'encombrements ou/et de coût.

La Figure 2 annexée illustre quant à elle une installation permettant la mise en œuvre de la présente invention.

On reconnait sur cette figure 2 les éléments suivants :
- 1 : une fosse d'entrée
- 2 : pompe
- 3 : injection de CO₂ (dans la canalisation 7)
- 4: automate
- 5 : bassin de sortie(optionnel)
- 6 : une mesure de pH pratiquée dans le bassin d'entrée
- 7 : canalisation de sortie de pompe
- 8 : sortie effluent neutralisé

Sur cette figure, il est supposé un débit d'effluent entrant constant. En conséquence, il n'est pas nécessaire d'inclure dans l'installation un débitmètre.
Considérons alors ici les mêmes conditions opératoires que précédemment c'est-à-dire :
- Un débit d'effluent à neutraliser d'environ 30 m³/h
- Une fosse entrée d'un volume utile de 2 m³, et donc quand il y a 2 m³ d'effluent dans la fosse la pompe de vidange se met en marche.
- La pompe est à débit fixe de 80 m³/h, par conséquence elle se mettra en route environ 15 fois par heure dans notre exemple.
- Une canalisation enterrée de diamètre 120 mm, soit un volume d'effluent résiduel dans cette canalisation de l'ordre de 1,7 m³.
- Un bassin de rejet avant le rejet en milieu naturel ou au réseau d'assainissement d'environ 1 m³ utile

Conformément à la présente invention, le mode de régulation proposé fonctionne de la façon suivante :
- Le pH de l'effluent est mesuré en amont de l'injection de CO₂ dans la canalisation (ici le pH est mesuré dans la fosse d'entrée et l'acide à injecter est du CO₂)
- Une courbe correspondant à la dose de CO₂ à injecter pour un volume d'effluent (1 litre, 1 m³) a été prédéfinie et rentrée dans le régulateur/automate (prédéfinie par exemple par des tests réalisés en amont)
- Au démarrage de la pompe, une vanne proportionnelle s'ouvre pour permettre l'injection du CO₂, la quantité injectée correspond à la dose préétablie multipliée par le débit d'effluent (débit mesuré ou débit de la pompe) l'ouverture étant déterminée par l'automate/régulateur.
- A l'arrêt de la pompe ou en l'absence d'un débit entrant de l'effluent, l'injection de CO₂ est interrompue par fermeture d'une vanne ou par tout autre moyen d'arrêt.

Avec ce mode de régulation, l'intégralité de l'effluent contenu dans la canalisation est neutralisé dès le démarrage de la pompe de vidange, les rejets sont toujours conformes sans modification de l'installation (pas de nécessité d'agrandir le bassin de sortie par exemple).

La présente invention concerne alors une méthode de traitement d'un effluent, qui comporte l'injection dans l'effluent de CO₂ ou d'un mélange gazeux comportant du CO₂, se caractérisant par la mise en œuvre des mesures suivantes :
a) On procède à une mesure du pH de l'effluent en amont du point d'injection du CO₂ ou du mélange, dans le procédé ;
b) On a procédé au préalable à la détermination d'une courbe de dose de CO₂ à injecter en fonction du pH d'un milieu pour un volume déterminé en litres ou en mètres cubes, courbe déterminée par exemple par calculs ou à partir de tests expérimentaux, et l'on entre cette courbe dans un régulateur ou automate apte à contrôler l'opération du procédé ;
c) On détecte la présence (l'arrivée) d'un débit d'effluent à traiter, par exemple par la mise en marche d'une pompe ou encore par la détection d'un débit à l'aide d'un débitmètre ;
d) On dispose de la valeur du débit d'effluent se présentant à l'entrée du procédé ;
e) On procède à une lecture sur ladite courbe de la dose de CO₂ correspondant au pH mesuré, et l'on procède à un calcul du débit de CO₂ à injecter en fonction du débit d'eau/effluent entrant, le ratio de débits correspondant à la dite dose ;
f) On injecte ledit débit de CO₂ ou de mélange dans l'effluent ;
g) On procède à une régulation du débit injecté à la valeur de consigne déterminée à l'étape e).

La présente invention concerne également une installation de traitement d'un effluent, réalisant l'injection dans l'effluent de CO₂ ou d'un mélange comportant du CO₂, comprenant :
i) Un moyen de mesure du pH de l'effluent, moyen situé en amont du point d'injection du CO₂ ou du mélange dans l'installation ;
ii) Un moyen de détection de l'arrivée d'un débit d'effluent à traiter, par exemple une pompe ou encore un débitmètre ;
iii) Un moyen de mesure du débit d'effluent à traiter se présentant à l'entrée du procédé ;
iv) Un régulateur ou automate apte à contrôler le traitement, en fonction de son analyse d'une courbe de dose de CO₂ à injecter en fonction du pH d'un milieu pour un volume déterminé en litres ou en mètres cube, courbe obtenue par exemple par calculs ou à partir de tests expérimentaux, l'automate étant apte à effectuer les actions suivantes :
   - à procéder à une lecture sur ladite courbe de la dose de CO₂ correspondant au pH mesuré, et à effectuer un calcul du débit de CO₂ à injecter en fonction du débit effluent entrant, le ratio de débits correspondant à la dite dose ;
   - à ordonner l'injection dudit débit de CO₂ ou de mélange dans l'effluent ;
   - à procéder à une régulation du débit injecté à la valeur de consigne déterminée lors dudit calcul.

## Revendications

1. Procédé de traitement d'un effluent, qui comporte l'injection (3) dans l'effluent de CO₂ ou d'un mélange comportant du CO₂, **se caractérisant par** la mise en œuvre des mesures suivantes :
a) On procède à une mesure (6) du pH de l'effluent en amont du point d'injection du CO₂ ou du mélange, dans le procédé ;
b) On a procédé au préalable, à la détermination d'une courbe de dose de CO₂ à injecter en fonction du pH d'un milieu pour un volume déterminé en litres ou en mètres cube, courbe déterminée par exemple par calculs ou à partir de tests expérimentaux, et l'on entre cette courbe dans un régulateur ou automate (4) apte à contrôler l'opération du procédé ;
c) On détecte la présence d'un débit d'effluent à traiter, par exemple par la mise en marche d'une pompe ou encore par la détection d'un débit par un débitmètre ;
d) On dispose de la valeur du débit d'effluent se présentant à l'entrée du procédé ;
e) On procède à une lecture sur ladite courbe de la dose de CO₂ correspondant au pH mesuré, et l'on procède à un calcul du débit de CO₂ à injecter en fonction du débit d'effluent entrant, le ratio de débits correspondant à la dite dose ;
f) On injecte ledit débit de CO₂ ou de mélange dans l'effluent ;
g) On procède à une régulation du débit injecté à la valeur de consigne déterminée à l'étape e).

2. Installation de traitement d'un effluent, réalisant l'injection (3) dans l'effluent de CO₂ ou d'un mélange comportant du CO₂, comprenant :
v) Un moyen (6) de mesure du pH de l'effluent, moyen situé en amont du point d'injection du CO₂ ou du mélange dans l'installation ;
vi) Un moyen de détection de l'arrivée d'un débit d'effluent à traiter, par exemple une pompe ou encore un débitmètre ;
vii) Un moyen de mesure du débit d'effluent à traiter se présentant à l'entrée du procédé ;
viii) Un régulateur ou automate (4) apte à contrôler le traitement, en fonction de son analyse d'une courbe de dose de CO₂ à injecter en fonction du pH d'un milieu pour un volume déterminé en litres ou en mètres cube, courbe obtenue par exemple par calculs ou à partir de tests expérimentaux, l'automate étant apte à effectuer les actions suivantes :
- à procéder à une lecture sur ladite courbe de la dose de CO₂ correspondant au pH mesuré, et à effectuer un calcul du débit de CO₂ à injecter en fonction du débit effluent entrant, le ratio de débits correspondant à la dite dose ;
- à ordonner l'injection dudit débit de CO₂ ou de mélange dans l'effluent ;
- à procéder à une régulation du débit injecté à la valeur de consigne déterminée lors dudit calcul.
